# EUROPEAN PATENT APPLICATION

(11) **EP 3 656 623 A1**
(43) Date of publication of application: **27.05.2020**
(21) Application number: 17881512.2
(22) Date of filing: 15.12.2017
(51) Int. Cl.: B60W 10/06, B60L 15/20

(54) **UPHILL STARTING CONTROL METHOD AND CONTROL DEVICE**

(30) Priority: 16.12.2016 CN 201611170295
(71) Applicant: Zhengzhou Yutong Bus Co., Ltd., Zhengzhou, Henan 450016 (CN)
(72) Inventor: JIN, Chao, Zhengzhou Henan 450061 (CN); ZHENG, Wei, Zhengzhou Henan 450061 (CN); XIAO, Dandan, Zhengzhou Henan 450061 (CN); LI, Xuelian, Zhengzhou Henan 450061 (CN)
(74) Representative: Gulde & Partner
(86) International application number: PCT/CN2017/116302
(87) International publication number: WO 2018/108137

(57) **Abstract**

A hill start control method and a control device are provided. When a gas pedal is depressed, a creep torque is obtained according to a corresponding relationship between a drive motor rotate speed and the creep torque, and an output torque is obtained according to a corresponding relationship among a vehicle speed, an opening degree of the gas pedal, and the output torque. Comparing magnitudes of the creep torque and the output torque, and when the creep torque is greater than the output torque, the output torque is redetermined; the redetermined output torque is greater than or equal to the creep torque, and vehicle start is controlled via the redetermined output torque. When the creep torque is less than or equal to the output torque, the vehicle responds the output torque and controls the vehicle start via the output torque. Via this method, the output torque of the vehicle may always overcome hill resistance to prevent a risk of hill slip.

## Description

### BACKGROUND OF THE INVENTION

### Field of the Invention

The invention relates to a hill start control method and a control device, and belongs to the technical field of vehicle hill start.

### Description of Related Art

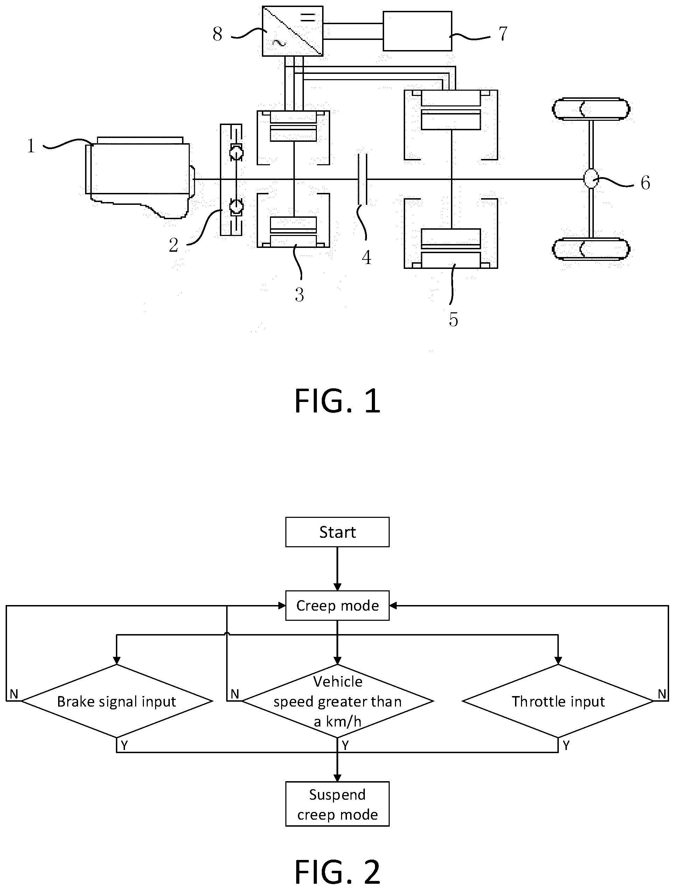

In the face of the current situation of energy shortage and environmental pollution, hybrid vehicles are currently the most effective energy-saving car solutions. At present, the application of the domestic hybrid bus largely adopts the structure of a single-axis dual motor. As shown in FIG. 1, an engine 1 is connected to an ISG motor 3 via a clutch or a torsion damper 2, and the ISG motor 3 and a main drive motor 5 are connected via a clutch 4, the main drive motor 5 is directly connected to a rear axle main reducer 6 to drive the vehicle, and an energy storage device 7 is electrically connected to the ISG motor 3 and the main drive motor 5 via a converter 8. The system is powered by the engine and the energy storage device to provide the forward power of the vehicle, thus optimizing the working range of the engine. At present, the electromechanical hybrid system of hybrid vehicles is relatively mature and has various forms, but there are still many problems in the specific control system, especially in the case of congested roads where the driver frequently steps on the gas pedal and the brake pedal, causing driving fatigue, and at the same time, the ride comfort is also reduced; in addition, the safety of driving on the hill is also the focus of attention.

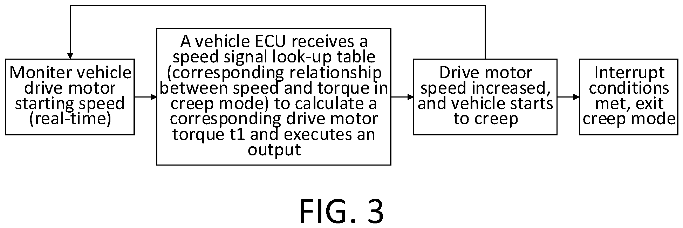

The new energy vehicle of the existing dual-motor system has the function of driving in the low-speed pure electric mode. Therefore, the separation of the engine and the main drive motor by the clutch control makes it possible to directly provide driving power by using the energy storage device, such that the creep function is easy to implement, and therefore the driver's frequent stepping on the gas pedal and the brake pedal in a congested road condition is avoided to prevent driving fatigue. As may be seen from FIG. 2, in the prior art, when the driver releases the hand brake in D gear without stepping on the throttle, the vehicle performs the creep function and responds to the creep torque, and the vehicle is creeping. The creep function is aborted until at least one of three conditions (brake signal input, vehicle speed greater than a km/h (a may be 5 to 10 km/h), and throttle signal input) occurs, and then the driver drives via throttle control instead. In particular, in the preparation of vehicle control strategy, the calculation method of creep torque is usually performed according to a certain empirical table, and the creep torque is closely related to the real-time rotate speed of the main drive motor, as shown in FIG. 3. The creep function also has a higher safety during hill start. When the vehicle is changed from a creep mode to hill start , the change may be achieved by stepping on the gas pedal. When the driver steps on the gas pedal, the creep mode is interrupted. Due to the effect of the creep function, the vehicle does not slip from the hill, but the driver may not easily and accurately grasp the magnitude of the output torque formed by stepping on the gas pedal. If the opening degree of the throttle is too small, the output torque of the vehicle is smaller than the creep torque of the creep mode, and the vehicle has the risk of hill slip.

### SUMMARY OF THE INVENTION

An object of the invention is to provide a hill start control method for solving the issue of a risk of hill slip of a vehicle when an output torque generated by a gas pedal is less than a creep torque of a creep mode. The invention also provides a hill start control device.

To achieve the above objects, the invention provides a hill start control method including the following steps:

(1) when a gas pedal is depressed, a creep torque of a vehicle and an output torque generated according to the gas pedal being depressed are obtained.

(2) Magnitudes of the creep torque and the output torque are compared, wherein when the creep torque is greater than the output torque, the output torque is redetermined, and the redetermined output torque is a torque value greater than or equal to the creep torque, and a vehicle start is controlled via the redetermined output torque; when the creep torque is less than or equal to the output torque, the vehicle responds to the output torque and controls the vehicle start via the output torque.

The creep torque is obtained according to a corresponding relationship between a drive motor rotate speed and the creep torque, and the output torque is obtained according to a corresponding relationship among a vehicle speed, an opening degree of the gas pedal, and the output torque.

In the hill start control method provided by the present solution, when the creep mode is changed to a hill start mode, the driver interrupts the creep mode by depressing the gas pedal, and when the gas pedal is depressed , obtains the creep torque of the vehicle and an output torque generated according to the gas pedal being depressed; then, the magnitudes of the two torques are compared. When the creep torque is greater than the output torque, meaning that the output torque is insufficient, such that the vehicle may slip from the hill, and the output torque needs to be redetermined. The redetermined output torque is a torque value greater than or equal to the creep torque, and the risk of hill slip may be avoided when the vehicle starts with the new output torque; when the creep torque is less than or equal to the output torque, the output torque is sufficient to start, then the vehicle directly responds to the output torque. In this way, the vehicle output torque may always overcome the hill resistance and avoid the risk of hill slip.

Moreover, the redetermined output torque is a sum of the creep torque and the output torque originally obtained.

Moreover, the vehicle controls the vehicle start via a maximum output torque when the redetermined output torque is greater than the maximum output torque of the vehicle.

The invention further provides a hill start control device, including a memory, a processor, and a computer program stored in the memory and operable on the processor, wherein the processor performs the following steps when executing the program:

(1) when a gas pedal is depressed, a creep torque of a vehicle and an output torque generated according to the gas pedal being depressed are obtained.

(2) Magnitudes of the creep torque and the output torque are compared, wherein when the creep torque is greater than the output torque, the output torque is redetermined, and the redetermined output torque is a torque value greater than or equal to the creep torque, and a vehicle start is controlled via the redetermined output torque; when the creep torque is less than or equal to the output torque, the vehicle responds to the output torque and controls the vehicle start via the output torque.

The creep torque is obtained according to a corresponding relationship between a drive motor rotate speed and the creep torque, and the output torque is obtained according to a corresponding relationship among a vehicle speed, an opening degree of the gas pedal, and the output torque.

Moreover, the redetermined output torque is a sum of the creep torque and the output torque originally obtained.

Moreover, the vehicle controls the vehicle start via a maximum output torque when the redetermined output torque is greater than the maximum output torque of the vehicle.

### BRIEF DESCRIPTION OF THE DRAWINGS

- FIG. 1: is a structural schematic of a hybrid power system.
- FIG. 2: is a schematic of a control strategy of an existing creep function.
- FIG. 3: is a schematic of an existing creep control process.
- FIG. 4: is a schematic of a control strategy of hill start.

### DESCRIPTION OF THE EMBODIMENTS

When a vehicle is creeping on a hill and a driver steps on the gas pedal, the creep mode is interrupted and switched to vehicle hill start. When performing a uphill start, a vehicle ECU needs to perform hill start control according to two torques, which are respectively a creep torque t1 and a vehicle output torque t2. Therefore, the first step of the hill start control method provided by the invention is to obtain the creep torque t1 and the vehicle output torque t2.

In particular, the vehicle ECU obtains the creep torque t1 via a look-up table according to the current drive motor rotate speed and records and stores the torque; wherein the table is a corresponding relationship table between the drive motor rotate speed and the creep torque, the data in the table is the corresponding relationship between the drive motor rotate speed and the drive motor torque (i.e., the creep torque), and the table may be drafted according to experience by combining with a drive motor external characteristic curve.

Moreover, when the driver depresses the gas pedal, the vehicle ECU obtains the vehicle output torque t2 via a look-up table according to the two input quantities, the current vehicle speed and the opening degree of the throttle, and records and stores the vehicle output torque t2. In particular, the table is a table of the corresponding relationship among vehicle speed, opening degree of gas pedal, and vehicle output torque, and stores the corresponding relationship among the three. Therefore, the table is a three-dimensional meter, and is usually drafted by taking into account both the external characteristic curve of the engine and the dual motor and the power distribution ratio of the two.

After the creep torque t1 and the vehicle output torque t2 are obtained, the vehicle ECU needs to compare the magnitudes between the two torques.

If the vehicle output torque t2≥the creep torque t1, it means that the vehicle output torque obtained according to the opening degree of the gas pedal that the driver depressed combined with the vehicle speed is sufficient to overcome the hill resistance, and the hill start may be safely performed. Therefore, the vehicle responds directly to a torque value of the output torque t2 and does not perform a checking calculation on the opening degree of the gas pedal, and the vehicle is normally driven.

If the vehicle output torque t2<the creep torque t1, it means that the vehicle output torque obtained according to the combination of the opening degree of the gas pedal and the vehicle speed cannot overcome the hill resistance. If the vehicle start is controlled with the output torque, the vehicle has a risk of hill slip, then, at this time, the vehicle demand torque t2 needs to be corrected. Specifically: the variable vehicle output torque t0 is redefined, t0=t10+t20, wherein t10 is the creep torque obtained according to the drive motor rotate speed table (creep mode corresponding relationship table), and therefore t10 is the creep torque t1, therefore, t10 may be found again from the table, or t1 may be directly used; t20 is the vehicle output torque obtained from the look-up table according to the two input quantities, the current vehicle speed and the opening degree of the throttle. Therefore, t20 is the output torque t2. Therefore, t20 may be obtained again from the look-up table, or t2 may be directly used. That is to say, the redetermined output torque is a sum of the original output torque t2 and the creep torque t1, and therefore the new output torque t0 is necessarily greater than the creep torque t1, and the new vehicle output torque t0 is sufficient to overcome the hill resistance, such that the hill start may be safely performed. In addition, since the output torque t2<the creep torque t1, the output torque t0 obtained by this calculation method is not much greater than the creep torque t1, so that the output torque of the vehicle is not excessively large, and the vehicle is prevented from jerking forward, thereby avoiding the safety risks caused by the jerking of the vehicle.

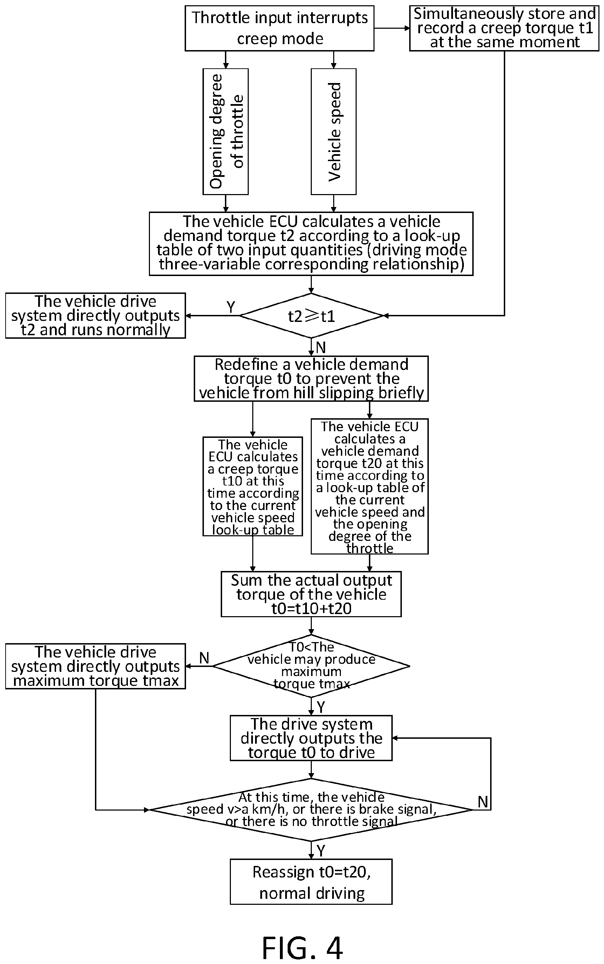

In addition, if the new output torque t0 is greater than a maximum output torque tmax of the vehicle power system, then the vehicle responds to the maximum output torque and controls the vehicle start according to tmax; if t0≤tmax, the vehicle start is still controlled according to t0, as shown in FIG. 4.

After starting for a period of time, when the vehicle meets the corresponding conditions, such as: the vehicle speed is greater than 5 to 10km/h, or the driver releases the gas pedal, or the driver depresses the brake pedal, indicating that the vehicle no longer has the risk of slipping, and the new demand torque t0 obtained by the vehicle ECU does not need to be corrected anymore, then t0=t20, and the hill start strategy provided by the invention is suspended, and the driver may drive normally. Moreover, other control processes in addition to the hill start control method provided by the invention may also achieve the above implement, such as: a control process in which the driver starts the normal control of the driving after the start of the hill start control is ended, or an invention point not belonging to the invention, or belonging to a conventional technique, and therefore the present embodiment is not described in detail.

In the above embodiment, the re-acquired output torque is a sum of the original output torque t2 and the creep torque t1, which is only one specific embodiment. As a more general embodiment, the re-acquired output torque is a torque value greater than or equal to the creep torque t1 (this torque value is set according to actual control requirements). In an embodiment in which a random larger value is used, as an example, the creep torque is used as the re-acquired output torque, which lead to two disadvantages. First, since the corresponding output torque is obtained according to the opening degree of the throttle and the vehicle speed, the corresponding creep torque is obtained according to the vehicle speed, and if the creep torque is directly used as the re-acquired output torque, the calculation of the torque value in which the opening degree of the gas pedal is continuously increased is not easily performed. Second, the relationship curve between the creep torque and the vehicle speed in creep mode is usually a gentler curve, and directly using the creep torque as the re-acquired output torque results in an ineffective vehicle start, and a second slip may even occur. Therefore, via a large number of test verifications, the sum of the original output torque t2 and the creep torque t1 is used as the re-acquired output torque, which enhances the safety of the driver.

Further, according to general control knowledge, the re-acquired output torque cannot be set to be much greater than the creep torque t1. For example, the re-acquired output torque is 110%*t1 to 130%*t1, so that there is no feeling of jerking during control, and driving experience may therefore be improved.

Therefore, based on the implementation that the re-acquired output torque is a torque value greater than or equal to the creep torque t1, if the vehicle is controlled by the output torque, the hill resistance may also be overcomed and the hill start may be more safely performed. However, the effect produced may not be significant in the implementation of the sum.

The above method may be stored as a computer program in a memory in the hill start control device and may be run on a processor in the hill start control device.

Specific embodiments are provided above, but the invention is not limited to the described embodiments. The basic concept of the invention lies in the above basic solutions, and those ordinarily skilled in the art may design various modified models, formulas, and parameters according to the teachings of the invention without inventive-step effort. Variations, modifications, alterations, and changes made to the embodiments without departing from the principles and spirit of the invention are still within the scope of the invention.

## Claims

1. A hill start control method, **characterized by** comprising following steps:
(1) when a gas pedal is depressed, obtaining a creep torque of a vehicle and an output torque generated according to the gas pedal being depressed;
(2) comparing magnitudes of the creep torque and the output torque, wherein when the creep torque is greater than the output torque, the output torque is redetermined, and the redetermined output torque is a torque value greater than or equal to the creep torque, and a vehicle start is controlled via the redetermined output torque; when the creep torque is less than or equal to the output torque, the vehicle responds to the output torque and controls the vehicle start via the output torque;
wherein the creep torque is obtained according to a corresponding relationship between a drive motor rotate speed and the creep torque, and the output torque is obtained according to a corresponding relationship among a vehicle speed, an opening degree of the gas pedal, and the output torque.

2. The hill start control method of claim 1, **characterized in that** the redetermined output torque is a sum of the creep torque and the output torque originally obtained.

3. The hill start control method of claim 1 or 2, **characterized in that** the vehicle controls the vehicle start via a maximum output torque when the redetermined output torque is greater than the maximum output torque of the vehicle.

4. A hill start control device, comprising a memory, a processor, and a computer program stored in the memory and operable on the processor, **characterized in that** the processor performs following steps when executing the program:
(1) when a gas pedal is depressed, obtaining a creep torque of a vehicle and an output torque generated according to the gas pedal being depressed;
(2) comparing magnitudes of the creep torque and the output torque, wherein when the creep torque is greater than the output torque, the output torque is redetermined, and the redetermined output torque is a torque value greater than or equal to the creep torque, and a vehicle start is controlled via the redetermined output torque; when the creep torque is less than or equal to the output torque, the vehicle responds to the output torque and controls the vehicle start via the output torque;
wherein the creep torque is obtained according to a corresponding relationship between a drive motor rotate speed and the creep torque, and the output torque is obtained according to a corresponding relationship among a vehicle speed, an opening degree of the gas pedal, and the output torque.

5. The hill start control device of claim 4, **characterized in that** the redetermined output torque is a sum of the creep torque and the output torque originally obtained.

6. The hill start control device of claim 4 or 5, **characterized in that** the vehicle controls the vehicle start via a maximum output torque when the redetermined output torque is greater than the maximum output torque of the vehicle.
